Europäisches Patentamt

European Patent Office

Office européen des brevets

(11) Publication number: 0 516 320 A2

# EUROPEAN PATENT APPLICATION

(21) Application number: 92304467.1

(51) Int. Cl.5: **H04N 9/64**

(22) Date of filing: **18.05.92**

(30) Priority: **27.05.91 FI 912543**

(43) Date of publication of application:
**02.12.92 Bulletin 92/49**

(84) Designated Contracting States:
**DE ES FR GB IT NL SE**

(71) Applicant: **SALORA OY**
**Salorankatu 5-7**
**SF-241 00 Salo(FI)**

(72) Inventor: **Rantanen, Henry**
**Mekaniikkapolku 18 C 42**
**SF-33720 Tampere(FI)**
Inventor: **Nieminen, Ari**
**Tasanteenraitti 8 F 12**
**SF-33610 Tampere(FI)**
Inventor: **Karlsson, Matti**
**Matomaenkatu 21 B 5**
**SF-37830 Viiala(FI)**

(74) Representative: **Singleton, Jeffrey**
**Eric Potter & Clarkson St. Mary's Court St.**
**Mary's Gate**
**Nottingham NG1 1LE(GB)**

(54) Processing of a multiple components video signal.

(57) The processing of a multiple video signal in the form of an RGB, YUV or HSI component can be performed in such a way that the correlation between the components is taken into consideration and only the most dominating component is processed. According to the method processing is performed on only one group of components, for instance the G-components of the image spots examined, the result of which is one component value of the group of components being processed. An identification code is connected to this value on the basis of which the two other component values (R and B components) belonging to the same image spot are connected to it.

FIG. 2

## BACKGROUND OF THE INVENTION

The invention relates to a method for processing a video signal in the form of a component by utilizing adjacent image spots for improving the image displayed on the picture tube.

The PAL and Secam television color systems presently used were developed in Europe in the 60's from the American NTSC system and no large changes in the systems have been realized so far. In spite of the introduction of teletext and stereo sound, the basic system itself has remained the same. An image transmitted by the PAL system, for instance, has weaknesses such as interference between luminance and color signals (cross color, cross luminance), area and line flicker due to a low frame rate, reflections generated on the transmission path and noise summing in the signal, bad resolution of the color signal, poor resolution when using a large screen etc. In spite of the constancy of the production and the transmission systems, the present technology has enabled the improvement of the displayed image by signal processing procedures performed on the receiver itself. Receivers in which the signal is corrected by digital video signal processing methods are called IDTV receivers, Improved Definition TV receivers, and these numerous methods are hereafter in this description referred to as the "IDTV procedures". It is possible to carry out the increasing of the field rate and the number of lines and to attenuate the noise of the image, to provide an interference-free freeze frame and to decrease cross color and cross luminance interference. It is also possible to use progressive scanning, whereby the whole image is scanned at one time.

The mechanisms of modern televisions are either fully or partly digital and realized by only a few integrated circuits and it is predictable that the degree of integration will increase in the future. Because the mechanisms of all TV manufactures will be similar to a greater degree, the manufactures will have to connect to them, one way or another, additional devices carrying out the desired IDTV procedures. However, the integration will result in that the only signal available which can be driven as an input to the accessory doing the digital signal processing is an RGB signal which is taken from the machinery to the picture tube. As a result of this, the IDTV procedures must be carried out by processing the RGB signal. Because a signal coming from an external device, such as a video, is also in the form of RGB, its forming also requires an accessory to carry out the processing of the RGB signal.

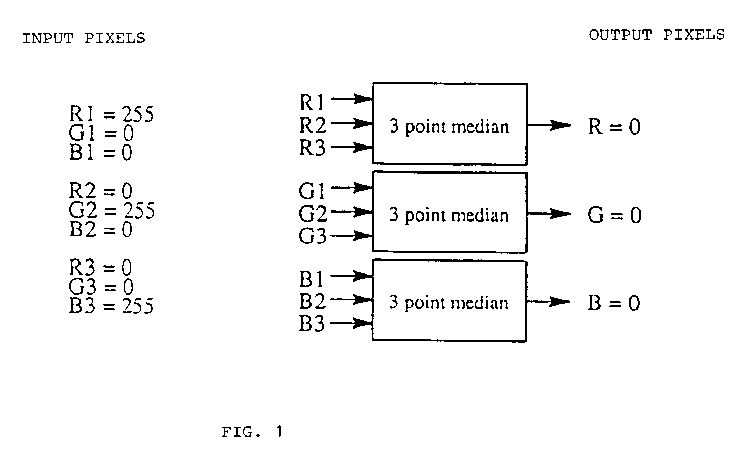

A processing method of a multidimensional videosignal is to filter it by each component, that is, to process each component of the signal separately. The disadvantage of this is that it produces defects in color and requires multiplex counting units. Defects in color are generated when the values of different components are chosen from different pixels. When using a filter, for instance, the filter changes one or more of the components of the video signal in such a way that the resulting pixel does not belong to the original group of pixels. If the change is considerable, the defect in color is visible on the screen and is distinguished from its surroundings in a disturbing way. This kind of situation is easily developed when processing, for instance, each component of an RGB signal separately by a median type filter, because the medians of different components can be selected from different pixels. Such a case is illustrated in Fig. 1. The figure represents the component values of the color signals of three pixels R1G1B1, R2G2B2, R3G3B3. The first pixel is red, the second one is green and the third one is blue. When forming a new pixel, three median filters are used in such a way that the red components R1, R2 and R3 of said three pixels are used as the input of one filter, the green components G1, G2 and G3 are used as the input of the second filter and the blue components B1, B2 and B3 are used as the input of the third median filter. Because the medians of the inputs are used as the output of the median filter, the weight value of each component of the new pixel thus formed is 0, whereby the pixel is visible as black on the screen.

In order to avoid defects in color which are generated when processing a video signal in the component form, the counting should be carried out by using a vector median, but this would result in an even more complex filter unit.

## OBJECTS OF THE INVENTION

The purpose of this invention is to provide a method which avoids the drawbacks of the above methods and which enables the realization of the IDTV procedures to be simplified. It is possible to utilize, in the method, previously-developed processing methods of a video signal which is in the form of RGB, YUV or HSI.

## SUMMARY OF THE INVENTION

This is achieved by the method according to Claim 1 which is characterized in that the processing unit only processes components which are corresponding components taken from different pixels, and the component obtained as a result of the processing is joined with the components which come from the same pixel as that one.

According to the invention the processing is thus performed on one of the three components of the video signal only. The component form can be an RGB, YUV or HSI representation. If the starting material consists of six pixels, for instance, the corresponding components of these pixels are placed each in its respective buffer memory, in other words, one memory comprises a matrix where one component of each of the six pixels is recorded, depending on the component representation of the video signal, for instance R, Y or H components, the second buffer has the second components, for instance G, U or S components recorded therein and B, V or I components are in the third buffer. The inputs of the processing unit comprise the contents of only one buffer, i.e., the components of different pixels corresponding to each other, and as a result of the processing, a component is obtained which is one of the input components. Each of the input components of the processing unit, the component of the pixel, has an identification connected thereto which does not affect the processing itself but is retained during the processing. Thus it is evident which pixel it is that the component obtained as a result of the processing comes from, so that two other components coming from the same pixel can be connected to this component. The components are accessed from the buffer memories on the basis of their identification. According to the invention, the processing operation must be so designed that it gives, as an output, one of the values of the input and in addition, it must be possible to identify which pixel the output comes from.

## BRIEF DESCRIPTION OF THE DRAWINGS

The invention is illustrated by reference to the appended drawings, where:

Fig. 1 represents the generation of a defect in color by a known method, and

Fig. 2 represents schematically an embodiment of the method according to the invention.

## DETAILED DESCRIPTION OF THE PREFERRED EMBODIMENT

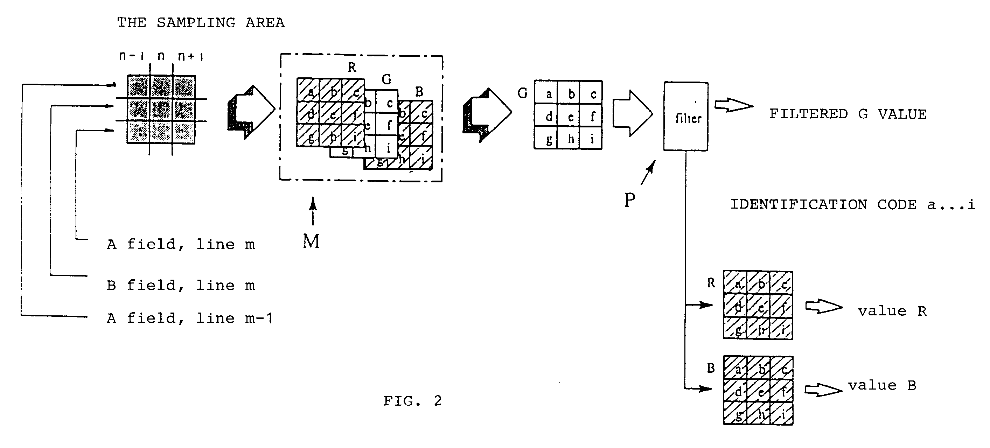

The contents of Fig. 1 are discussed above. The embodiment according to Fig. 2 represents the filtering of the G-component of an RGB signal, but the invention is not limited to this. Most processing methods of a digital signal developed for TV have been developed by using the Y component of the YUV signal because the eye is the most sensitive element to perceive the defects in the brightness of the picture. These methods can be utilized in this method in such a way that the RGB signal is modified into the form of YUV in accordance with known modification patterns and the Y component thus obtained is then processed, whereby the U and V components are connected to the Y component obtained as a result of the processing, according to the invention, by choosing them from the same pixel from which the Y-component was chosen. After this the YUV signal is modified back to the RGB form and taken to the picture tube.

Fig. 2 shows nine pixels on the left which are on successive lines m and m-1 of A-field, and on line m of B-field scanned between them and in the vertical direction on adjacent columns n-1, n and n+1. The image spots included in the counting may also be situated in an other way, they can come only from the other field, for instance. The contents of each pixel generally consist of three components: red color R, green G and blue B. The corresponding components of each pixel are recorded in the form of a vector into a recording member, for instance a buffer memory M, and they are given identification code a..1 at the same time. Thus one storage space of the buffer is filled with R-components, the second one with G-components and the third one with B-components. Same identification code a..i is sufficient for the components of one pixel. After this the G-components of the pixels are taken from the memory because it is the most dominating component with respect to the luminance. An operation, for instance a median filtering, is performed on the components in the processing unit P, the result of which is one of the G-values of the inputs. The identification code has no effect on the operation but it is retained along with each G-value. After the median filtering the filtered value of the G-component is obtained, with which an identification code is connected. The corresponding values R and B are accessed in accordance with the identification code a..i from the input vector recorded in memory M. These values are then connected to the filtered G-value. Therefore R and B components are obtained from the same pixel from which G-value resulting from the filtering comes from, whereby the pixel obtained as a result of the whole method is one of the original pixels, therefore no defect in color will be generated.

By using the method according to the invention, there is normally no generation of defects in color and a theoretical prospect of them generating is only possible on the limits where G component remains the same while R and/or B components change. Taking into consideration the strong correlation between the components, it is very unlikely on natural pictures for the G-component not to change in the changing spots of R and B. When testing the method according to the invention on natural sequences and on a test picture produced digitally, there was no perception of defects in color.

The invention can be applied in many ways within the scope of the Claims. Depending on the operation performed, there can be a different number of input pixels and they can come from the same picture or from different pictures. The operation performed determines whether a line and/or field memory is needed and how large it must be. It is neither essential whether the video signal is in the form of RGB, YUV or HSI or if the modifying algorithm used is made for one of these forms because the signal can always be modified into the desired component form. Because most modifying methods have been developed for the luminance component Y of the YUV signal, the RGB signal can be modified into this form, or instead of Y, the most dominent component G with respect to the luminance of the RGB signal can be used because Y = 0,3 R + 0,6 G + 0,1 B.

The method is adapted for use in IDTV televisions where the field frequency or line rate is raised, the noise is eliminated and modifications of display ratios are performed by means of processing the digital signal.

## Claims

1. A method for processing a multiple video signal, wherein the color and the brightness of the pixels examined are determined by three components (RGB or YUV or HSI), **characterized** in that
   - a certain number of pixels is chosen, they are given an identification code and the pixels are stored in the component form in a storage member (M),
   - an operation (P) is performed on one group of components of the pixels resulting in one component of the said group of components with the respective identification code,
   - those components are accessed from the storing member (M) to which the same identification code is connected which is connected to the component obtained as a result of the operation (P) and they are connected to this component.

2. A method according to Claim 1, **characterized** in that the pixels are modified from one component form into another component form before recording.

3. A method according to Claims 1 or 2, **characterized** in that the components are modified from one component form into another component form after the components have been accessed from the storing member (M) and connected to the component obtained as a result of the operation (P).

4. A method according to Claims 1 or 2, **characterized** in that the recording of the components is performed in the RGB component form.

5. A method according to Claim 4, **characterized** in that the operation (P) is performed on the G-components of the pixels.

6. A method according to Claim 1, **characterized** in that the operation (P) is a median operation.

7. A method according to Claim 6, **characterized** in that the operation (P) is a median filtering.

INPUT PIXELS                                                    OUTPUT PIXELS

R1 = 255          R1 →  ┌─────────────────┐
G1 = 0            R2 →  │  3 point median │ →  R = 0
B1 = 0            R3 →  └─────────────────┘

R2 = 0            G1 →  ┌─────────────────┐
G2 = 255          G2 →  │  3 point median │ →  G = 0
B2 = 0            G3 →  └─────────────────┘

R3 = 0            B1 →  ┌─────────────────┐
G3 = 0            B2 →  │  3 point median │ →  B = 0
B3 = 255          B3 →  └─────────────────┘

FIG. 1

EP 0 516 320 A2

THE SAMPLING AREA

n-1  n  n+1

A field, line m

B field, line m

A field, line m-1

M

R  G  B

G  | a | b | c |
   | d | e | f |
   | g | h | i |

P

filter → FILTERED G VALUE

IDENTIFICATION CODE a...i

R | a | b | c |
  | d | e | f |  → value R
  | g | h | i |

B | a | b | c |
  | d | e | f |  → value B
  | g | h | i |

FIG. 2

EP 0 516 320 A2